# EUROPÄISCHE PATENTANMELDUNG

(11) **EP 3 964 733 A1**
(43) Veröffentlichungstag der Anmeldung: **09.03.2022**
(21) Anmeldenummer: 21189329.2
(22) Anmeldetag: 03.08.2021
(51) Int. Cl.: F16H 57/04

(54) **GETRIEBE UND EINE ANTRIEBSANORDNUNG MIT EINEM ENTSPRECHENDEN GETRIEBE**

(30) Priorität: 08.09.2020 DE 102020211234
(71) Anmelder: Robert Bosch GmbH, 70442 Stuttgart (DE)
(72) Erfinder: Kuehnemund, Martin, 70499 Stuttgart (DE)

(57) **Zusammenfassung**

Es wird ein Getriebe (10), insbesondere für eine elektrische Antriebsanordnung, mit einem Gehäuse (12), wobei das Gehäuse (12) eine Gehäusewandung (13) mit einer Innenfläche (14) und einer Außenfläche (16) aufweist, wobei an der Innenfläche (14) des Gehäuses (12) mindestens ein Leitelement (22) angeordnet ist, wobei das Leitelement (22) derart ausgestaltet und angeordnet ist, dass dieses zusammen mit der Gehäusewandung (13) einen Schmiermittelkanal (23) definiert, entlang dem ein sich im Gehäuse (12) befindendes Schmiermittel (24) geführt werden kann, und eine elektrische Antriebsanordnung, insbesondere für ein Fahrzeug, mit einer elektrischen Maschine und einem entsprechenden Getriebe (10) vorgeschlagen.

## Beschreibung

### Stand der Technik

Die Erfindung betrifft ein Getriebe, insbesondere für eine elektrische Antriebsanordnung, nach dem Oberbegriff des Anspruchs 1 sowie eine elektrische Antriebsanordnung, insbesondere für ein Fahrzeug, mit Merkmalen des nebengeordneten Anspruchs.

Ein Getriebe kann im Wesentlichen durch zwei Varianten gekühlt und/oder geschmiert werden. Dabei wird ein Schmiermittel, üblicherweise Öl, verwendet, das Schmier- und Kühleigenschaften aufweist.

In einer ersten Variante (aktive Kühlung) wird eine Ölpumpe eingesetzt, um das als Schmiermittel eingesetzte Öl gezielt zu den schmier- und kühlungsbedürftigen Komponenten zu leiten. Zusätzlich wird ein Öl-Wasser-Wärmetauscher als externes Bauteil angebracht, um das erwärmte Öl mittels Kühlwasser zu kühlen und somit ein Überhitzen des Getriebes zu verhindern.

So beschreibt bspw. DE 10 2013 204 766 B4 ein Getriebe mit einer aktiven Kühlung.

Eine zweite Variante (passive Kühlung) ist eine sogenannte Planschschmierung. Dabei befindet sich am Boden des Getriebes ein Ölreservoir, der sogenannte Ölsumpf. Innerhalb des Getriebes sind meist mehrere Zahnräder angeordnet, die miteinander kämmen. Dabei liegt eines der Zahnräder teilweise im Ölsumpf. Durch die Rotation des im Ölsumpf liegenden Zahnradabschnittes wird das Öl im Gehäuse zu den einzelnen Komponenten verteilt. Hierbei entfällt die Ölpumpe und ein externer Wärmetauscher kann nicht genutzt werden. Das bedeutet, dass das Öl die von den einzelnen Komponenten aufgenommene Wärme nur über das Gehäuse abgeben kann.

Bei der aktiven Kühlung werden zusätzliche Komponenten (z. B. Ölpumpe, externer Wärmetauscher) eingesetzt, um die Kühlung zu realisieren, welche die Kosten des Systems erhöhen.

Bei der passiven Kühlung limitiert der Wärmetransfer des Öls über das Gehäuse den Wirkungsgrad der Kühlung.

### Offenbarung der Erfindung

Das der Erfindung zugrunde liegende Problem wird durch ein Getriebe, insbesondere für eine elektrische Antriebsanordnung, mit den Merkmalen des Anspruchs 1 und durch eine elektrische Antriebsanordnung, insbesondere für ein Fahrzeug, mit den Merkmalen des nebengeordneten Anspruchs gelöst. Vorteilhafte Weiterbildungen der Erfindung sind in den Unteransprüchen genannt.

Erfindungsgemäß wird ein Getriebe (z. B. Zahnradgetriebe), insbesondere für eine elektrische Antriebsanordnung vorgeschlagen, wobei das Getriebe ein Gehäuse mit einer Gehäusewandlung aufweist. Die Gehäusewandung weist eine Innenfläche und eine Außenfläche auf. Das Gehäuse weist mindestens ein Leitelement auf. Dieses ist an der Innenfläche der Gehäusewandung angeordnet. Das Leitelement ist derart ausgestaltet und angeordnet, dass dieses zusammen mit der Gehäusewandung einen Schmiermittelkanal definiert. Entlang dieses Schmiermittelkanals kann ein sich im Gehäuse befindendes Schmiermittel geführt werden.

Das Getriebe kann als Getriebeeinheit oder als Getriebemodul einer elektrischen Antriebsanordnung ausgeführt sein.

Das Leitelement kann sowohl bei einer aktiven als auch bei einer passiven Getriebekühlung eingesetzt werden.

Bei einer passiven Kühlung entsteht der größte Wärmewiderstand zwischen dem Schmiermittel und der Gehäusewandung. Der Wärmetransfer wird durch diesen Wärmewiderstand limitiert. Dieser Wärmewiderstand kann durch die Kontaktfläche zwischen Schmiermittel und Gehäusewandung, der Strömungsgeschwindigkeit und/oder Strömungsart des Schmiermittels beeinflusst werden.

Das Schmiermittel kann in Richtung eines meist am Boden des Gehäuses angeordneten Schmiermittelreservoirs, im Folgenden als Schmiermittelsumpf bezeichnet, fließen und/oder geführt werden. Der durch das Leitelement und die Gehäusewandung gebildete Schmiermittelkanal kann den Fluss des Schmiermittels in Richtung des Schmiermittelsumpfes (entlang der Schwerkraftrichtung "nach unten" in Richtung Bodes des Gehäuses) beeinflussen. Dabei kann die Fließrichtung und/oder die Fließgeschwindigkeit des Schmiermittels verändert werden. Es kann ebenso die Strömungsart beeinflusst werden, bspw. eine turbulente Strömung erzeugt werden.

Hierzu kann das Leitelement unterschiedliche geometrische Formen und/oder Profilmerkmale aufweisen. Das Leitelement kann an seiner Oberfläche Profilierung, Rippen, Noppen oder dgl. aufweisen, um die Oberfläche des Halteelements zu vergrößern und/oder den Fluss des Schmiermittels zu beeinflussen. So können bspw. Rippen und/oder Noppen an dem Leitelement eine turbulente Strömung des Schmiermittels erzeugen.

Durch eine Variation der geometrischen Form des Leitelements kann ebenfalls die Strömungsgeschwindigkeit, -richtung und/oder -art des Schmiermittels beeinflusst werden.

Ebenso kann durch die Variation einer Position, an der das Leitelement auf der Innenfläche der Gehäusewandung angeordnet wird, als auch durch die Variation der Anzahl der Leitelemente die Strömungsgeschwindigkeit, -richtung und/oder -art des Schmiermittels beeinflusst werden.

Gemäß einer Weiterbildung kann das Schmiermittel ein Öl sein. Auch andere Flüssigkeiten mit unterschiedlicher Viskosität und/oder Isolier-/Schmiereigenschaften sind als Schmiermittel denkbar.

Gemäß einer Weiterbildung kann an der Außenfläche der Gehäusewandung mindestens ein Kühlkanal angeordnet sein. Der Kühlkanal kann als separates Element ausgeführt, bspw. an der Außenfläche der Gehäusewandung angrenzend, oder in das Gehäuse bzw. in die Gehäusewandung integriert, sein.

Alternativ oder zusätzlich zu einem Kühlkanal kann an der Außenfläche der Gehäusewandung mindestens eine Kühlrippe (z. B. als Blechelement) angeordnet sein. Diese kann als separates Element ausgeführt, bspw. an der Außenfläche der Gehäusewandung angrenzend, oder in das Gehäuse bzw. in die Gehäusewandung integriert, sein. Die Kühlrippe ist vorzugsweise nicht innerhalb des Kühlkanals angeordnet.

Gemäß einer Weiterbildung kann das Leitelement und/oder der Schmiermittelkanal zum Kühlkanal und/oder Kühlrippe(n) benachbart sein. Mit anderen Worten, können das Leitelement und/oder der Schmiermittelkanal zu dem Kühlkanal und/oder Kühlrippe(n) nebeneinander oder parallel verlaufen. So kann zwischen dem in dem Schmiermittelkanal geführten Schmiermittel und dem Kühlkanal und/oder Kühlrippe(n) der Wärmetransfer optimiert werden. Mit anderen Worten kann eine optimierte Wärmebrücke realisiert werden.

Gemäß einer Weiterbildung kann innerhalb des Kühlkanals ein Kühlmedium angeordnet und/oder geführt sein. Das Medium kann ein Fluid, bspw. Luft, Wasser, Öl oder dergleichen sein.

Es sind aber ebenso solide Strukturen denkbar, z. B. ein Blechelement in Form einer oder mehrerer Kühlkanalrippen, die innerhalb des Kühlkanals angeordnet sind. Auch eine Kombination aus einem innerhalb des Kühlkanals geführten Fluid,einer soliden Struktur, beispielsweise in Form von Kühlkanalrippen, innerhalb des Kühlkanals, und/oder Kühlrippe(n) außerhalb des Kühlkanals ist denkbar.

Gemäß einer Weiterbildung kann das Leitelement einstückig mit dem Gehäuse ausgebildet sein. Dies kann bspw. bei der Herstellung des Gehäuses in ein und demselben Herstellungsschritt mit dem Gehäuse, z. B. beim Guss des Gehäuses, realisiert werden. Damit entfällt eine Montage des Leitelements.

Somit ist kein separater Schritt bei der Herstellung und/oder Montage des Leitelements nötig.

Gemäß einer alternativen Ausgestaltung kann das Leitelement als ein separates Element ausgebildet sein, das an der Innenfläche der Gehäusewandung fixierbar oder fixiert ist. Hierfür ist ein zusätzlicher Montageschritt nötig, dafür kann ein Getriebe ohne ein Leitelement mit einem solchen nachgerüstet werden. Zudem kann die Geometrie des Leitelements frei gewählt werden, ohne die Einschränkung der Entformungsrichtung beim Guss beachten zu müssen.

Gemäß einer Weiterbildung kann das Leitelement an der Innenfläche der Gehäusewandung mittels einer Schraub- und/oder Klippverbindung fixierbar sein oder fixiert werden. Hierdurch kann eine einfache Montage und somit ein einfaches und kostengünstiges Nachrüsten realisiert werden.

Gemäß einer Weiterbildung kann das Leitelement Plastik oder Metall umfassen oder aus Plastik oder Metall bestehen. Dabei können sowohl die Gehäusewandung als auch das Leitelement dasselbe Material umfassen oder aus demselben Material bestehen. Somit kann die Gehäusewandung Plastik umfassen oder aus Plastik bestehen.

Erfindungsgemäß wird eine Antriebsanordnung, insbesondere für ein Fahrzeug (bspw. ein Kraftfahrzeug), mit einer elektrischen Maschine und einem Getriebe gemäß obiger Ausführungen vorgeschlagen. Hinsichtlich der damit erzielbaren Vorteile wird auf die diesbezüglichen Ausführungen zum Getriebe verwiesen. Zur weiteren Ausgestaltung der Antriebsanordnung können die im Zusammenhang mit dem Getriebe beschriebenen Maßnahmen dienen.

Mit einer elektrischen Maschine ist im Sinne dieser Anmeldung ein Elektromotor gemeint. Dabei sind elektrische Maschine (Elektromotor) und Getriebe triebtechnisch miteinander verbunden, d.h. die elektrische Maschine treibt das Getriebe an.

Nachfolgend wird eine Ausführungsform der Erfindung unter Bezugnahme auf die beiliegende Zeichnung erläutert. Es zeiget:

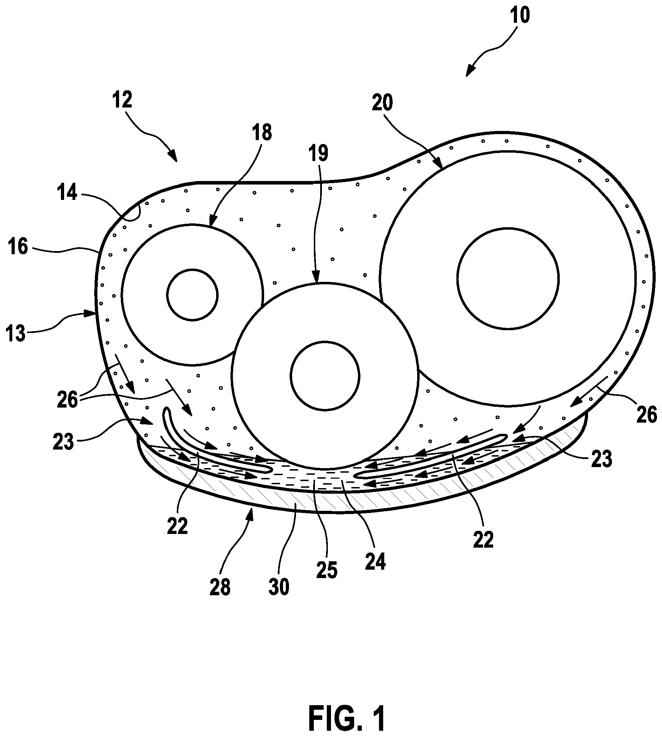

- Figur 1: eine schematische Schnittdarstellung durch ein Getriebe.

In der Figur 1 ist eine schematische Schnittdarstellung durch ein passiv gekühltes Getriebe 10 zu sehen. Das Getriebe 10 weist ein Gehäuse 12 auf, wobei das Gehäuse 12 eine Gehäusewandung 13 aufweist. Die Gehäusewandung 13 weist eine Innenfläche 14 und eine Außenfläche 16 auf. Innerhalb des Gehäuses 12 sind drei Zahnräder 18, 19, 20 angeordnet, die miteinander kämmen.

Auf der Innenfläche 14 der Gehäusewandung 13 sind zwei Leitelemente 22 angeordnet. Vorliegend sind diese in der unteren Hälfte des Gehäuses 12 positioniert und länglich ausgestaltet.

Zur Kühlung und/oder Schmierung des Getriebes 10 befindet sich innerhalb des Getriebes 10 ein Schmiermittel 24. Vorliegend handelt es sich bei dem Schmiermittel 24 um Öl. Dieses sammelt sich aufgrund der Schwerkraft in einem Bereich am Boden des Getriebes 10 in einem sogenannten Schmiermittelsumpf 25.

Die Zahnräder 18, 19, 20 sind derart angeordnet, dass das Zahnrad 19 teilweise in den Schmiermittelsumpf 25 hineinragt. Wenn sich die Zahnräder 18, 19, 20 um die jeweiligen Rotationsachsen drehen, verteilt sich das Schmiermittel 24 innerhalb des Gehäuses 12. Dabei wird das Schmiermittel 24 aus dem Schmiermittelsumpf 25 durch das Zahnrad 19 mitgenommen und in dem Getriebe 10 verteilt.

Da die Zahnräder 18, 19, 20 miteinander kämmen, gelangt das Schmiermittel 24 vom Zahnrad 19 an die anderen Zahnräder 18 und 20. Aufgrund der Rotation der Zahnräder 18, 19, 20 wird das Schmiermittel 24 auch in den Innenraum des Getriebes 10 und gegen die Innenfläche 14 der Gehäusewandung 13 geschleudert. Es bildet sich auch ein Schmiermittelnebel innerhalb des Gehäuses 12.

Das innerhalb des Gehäuses 12 verteilte Schmiermittel 24 setzt sich insbesondere an der Innenfläche 14 der Gehäusewandung 13 ab und fließt unter Schwerkrafteinwirkung in Richtung des Bodens des Getriebes 10 in den Schmiermittelsumpf 25 zurück. Dieser Rückfluss ist in Figur 1 mit den Pfeilen 26 angedeutet. Dabei wird der Rückfluss des Schmiermittels 24 durch die Leitelemente 22 beeinflusst.

Die Leitelemente 22 stellen ein Hindernis für das zurückfließende Schmiermittel 24 dar. Das Schmiermittel 24 fließt insbesondere um die Leitelemente 22 herum bzw. an den Leitelementen 22 entlang, so dass sich Schmiermittelkanäle 23 ausbilden. Aufgrund der geometrischen Form, Größe, Positionierung und Ausgestaltung der Leitelemente 22 können diese Schmiermittelkanäle 23 wunschgemäß eingestellt werden. So kann auf die Strömungsgeschwindigkeit,- richtung und -art des Schmiermittels 24 Einfluss genommen werden.

Das im Getriebe 10 verteilte Schmiermittel 24 nimmt die Wärme des Getriebes 10 bzw. der im Getriebe 10 angeordneten Elemente (z. B. Zahnräder 18, 19, 20) auf und gibt diese Wärme an das Gehäuse 12 bzw. die Gehäusewandung 13 ab. Die Gehäusewandung 13 gibt wiederum die Wärme an die Umgebung ab.

Die Leitelemente 22 vergrößert die Kontaktoberfläche zwischen dem Schmiermittel 24 und der Gehäusewandung 13, sodass der Wärmetransfer vom Schmiermittel 24 zur Gehäusewandung 13 hin verbessert wird.

Auf der Außenfläche 16 der Gehäusewandung 13 ist ein Kühlkanal 28 angeordnet. Vorliegend ist dieser im Bereich des Kühlmittelsumpfes 25 und der Leitelemente 22 positioniert. Innerhalb des Kühlkanals 28 kann sich ein Kühlmedium 30 befinden. Dabei kann das Kühlmedium als Fluid, bspw. Luft (Gas) oder Wasser (Flüssigkeit), innerhalb des Kühlkanals 28 vorliegen.

Es ist aber auch denkbar, dass solide, feste Elemente innerhalb des Kühlkanals 28 angeordnet sind, oder den Kühlkanal 28 ausbilden (Kühlkanalrippen; nicht dargestellt). Beispielsweise können Kühlkanalrippen aus Metall oder einem anderem Material vorgesehen sein. Auch eine Kombination aus einem soliden Element und einem Fluid können einen Kühlkanal 28 definieren.

Alternativ oder zusätzlich zum Kühlkanal 28 können eine oder mehrere Kühlrippen vorgesehen sein, die außerhalb des Kühlkanals 28, an der Außenfläche 16 der Gehäusewandung 13 bzw. an der Außenfläche des Kühlkanals 28 angeordnet sind (nicht dargestellt).

Der Kühlkanal 28 führt die Wärme von der Gehäusewandung 13 ab, so dass der Wärmetransfer vom Gehäuse 12 optimiert wird.

Die Leitelemente 22 sind derart ausgestaltet und positioniert, dass die Schmiermittelkanäle 23 zu dem Kühlkanal 28 benachbart sind. Mit anderen Worten kann durch die Leitelemente 22 der Rückfluss des Schmiermittels 24 derart beeinflusst werden, dass das Schmiermittel 24 gezielt entlang des auf der Außenfläche 16 angeordneten Kühlkanals 28 geführt wird. Damit kann der Wärmetransfer bzw. die Kühlwirkung verbessert werden.

Es ist ebenso denkbar, die Leitelemente 22 in einem aktiven Kühlsystem einzusetzen oder das in Figur 1 gezeigte passive Kühlsystem zusätzlich mit Elementen eines aktiven Kühlsystems zu kombinieren. So kann bspw. das Schmiermittel 24 zusätzlich mit einer Förderpumpe (Ölpumpe) an einen externen Wärmetauscher gefördert werden, um das Schmiermittel 24 weiter abzukühlen und die Kühlwirkung weiter zu verbessern.

## Patentansprüche

1. Getriebe (10), insbesondere für eine elektrische Antriebsanordnung, mit einem Gehäuse (12), wobei das Gehäuse (12) eine Gehäusewandung (13) mit einer Innenfläche (14) und einer Außenfläche (16) aufweist, **dadurch gekennzeichnet, dass** an der Innenfläche (14) des Gehäuses (12) mindestens ein Leitelement (22) angeordnet ist, wobei das Leitelement (22) derart ausgestaltet und angeordnet ist, dass dieses zusammen mit der Gehäusewandung (13) einen Schmiermittelkanal (23) definiert, entlang dem ein sich im Gehäuse (12) befindendes Schmiermittel (24) geführt werden kann.

2. Getriebe (10) nach Anspruch 1, **dadurch gekennzeichnet, dass** das Schmiermittel (24) ein Öl (26) ist.

3. Getriebe (10) nach Anspruch 1 oder Anspruch 2, **dadurch gekennzeichnet, dass** an der Außenfläche (16) der Gehäusewandung (13) mindestens ein Kühlkanal (28) und/oder mindestens eine Kühlrippe angeordnet ist.

4. Getriebe (10) nach dem voranstehenden Anspruch, **dadurch gekennzeichnet, dass** das Leitelement (22) und/oder der Schmiermittelkanal (23) zum Kühlkanal (28) und/oder der Kühlrippe benachbart sind.

5. Getriebe (10) nach einem der beiden voranstehenden Ansprüche, **dadurch gekennzeichnet, dass** innerhalb des Kühlkanals (28) ein Kühlmedium (30) angeordnet und/oder geführt ist.

6. Getriebe (10) nach einem der voranstehenden Ansprüche, **dadurch gekennzeichnet, dass** das Leitelement (22) einstückig mit dem Gehäuse (12) ausgebildet ist.

7. Getriebe (10) nach einem der Ansprüche 1 bis 5, **dadurch gekennzeichnet, dass** das Leitelement (22) als ein separates Element ausgebildet ist, das an der Innenfläche (14) der Gehäusewandung (13) fixierbar oder fixiert ist.

8. Getriebe (10) nach dem voranstehenden Anspruch, **dadurch gekennzeichnet, dass** das Leitelement (22) an der Innenfläche (14) der Gehäusewandung (13) mittels einer Schraub- und/oder Klippverbindung fixierbar oder fixiert ist.

9. Getriebe (10) nach einem der voranstehenden Ansprüche, **dadurch gekennzeichnet, dass** das Leitelement (22) Plastik oder Metall umfasst oder aus Plastik oder Metall besteht.

10. Elektrische Antriebsanordnung, insbesondere für ein Fahrzeug, mit einer elektrischen Maschine und einem Getriebe (10) nach einem der Ansprüche 1 bis 9.
